# EUROPÄISCHE PATENTSCHRIFT

(11) **EP 4 011 809 B1**
(45) Veröffentlichungstag und Bekanntmachung des Hinweises auf die Patenterteilung: **13.08.2025**
(21) Anmeldenummer: 21206405.9
(22) Anmeldetag: 04.11.2021
(51) Int. Cl.: B65G 47/86

(54) **KLAMMERVORRICHTUNG ZUM HALTEN EINES BEHÄLTERS**
CLAMPING DEVICE FOR HOLDING A CONTAINER
DISPOSITIF DE SERRAGE PERMETTANT DE MAINTENIR UN RÉCIPIENT

(30) Priorität: 03.12.2020 DE 102020132155
(43) Veröffentlichungstag der Anmeldung: 15.06.2022
(73) Patentinhaber: KRONES AG, 93073 Neutraubling (DE)
(72) Erfinder: Giamouzis, Vasileios, 93073 Neutraubling (DE)
(74) Vertreter: v. Bezold & Partner Patentanwälte - PartG mbB

(56) Entgegenhaltungen:
- WO-A1-2018/103933
- JP-A- 2015 231 652

## Beschreibung

### Technisches Gebiet

Die Erfindung betrifft eine Klammervorrichtung zum Halten eines Behälters für eine Behälterbehandlungsanlage. Die Erfindung betrifft ebenfalls ein Drehelement für eine Klammervorrichtung.

### Technischer Hintergrund

In Behälterbehandlungsanlagen zum Herstellen, Reinigen, Füllen, Verschließen usw. von Behältern können Behälter mittels Greifer- bzw. Klammervorrichtungen gehalten und durch die Anlage transportiert werden.

Beispielsweise offenbart die DE 10 2011 117 622 A1 eine Flaschenklammer mit zwei jeweils eine Schwenkachse aufweisenden Klammerarmen. Die Flaschenklammer weist ein Ausstoßelement auf. Das Ausstoßelement als auch die Klammerarme weisen magnetische Bereiche auf.

SU 100 7968 A1 offenbart einen Greifer, der Backen mit schwenkbar am Gehäuse angebrachten Schäften und einen Antrieb mit einer Stange und einem Kolben mit einer Arbeitsfläche in Form eines Keils aufweist. Die Backenschäfte sind Permanentmagnete, die einander mit entgegengesetzten Polen gegenüberstehen. Der Kolben ist ein Permanentmagnet, dessen neutrale Ebene durch die Achse des Kolbens verläuft. Die Pole des Kolbenmagneten stehen den Polen der Permanentmagnetbackenschäfte gegenüber.

JP 2015-231652 A offenbart eine Roboterhand umfassend einen Motor mit einer Drehwelle, mehrere Klauenteile zum Greifen eines Werkstücks und ein magnetisches Übertragungsteil, das auf einem Bewegungsübertragungsweg angeordnet ist, in dem die Drehbewegung des Motors in eine Bewegung umgewandelt wird, bei der die Klauenteile das Werkstück greifen.

Die WO 2018/103933 A1 betrifft eine Behälterklammer zum Halten von Behältern. Es sind ein im Wesentlichen horizontal ausgerichtetes Tragelement, eine am Tragelement angeordnete Behälterklammer zum Halten von Behältern mit zwei jeweils um eine Drehachse in einer ersten horizontalen Ebene verschwenkbaren Klammerarmen und eine am Tragelement in einer zweiten bspw. horizontalen Ebene drehbar gelagerte Steuereinrichtung mit bogenförmigen Steuerkurven vorgesehen. Jeder Klammerarm ist mit einem Führungselement in einer der Steuerkurven gelagert. Die Klammerarme sind mittels einer Drehbewegung der Steuereinrichtung zwischen einer Öffnungsposition und einer Erfassungsposition verschwenkbar. Die erste und zweite Ebene sind identisch oder im Wesentlichen parallel zueinander ausgerichtet.

Der Erfindung liegt die Aufgabe zu Grunde, eine alternative und/oder verbesserte Klammervorrichtung zu schaffen.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Gemäß einem Aspekt ist eine Klammervorrichtung (zum Beispiel Neckhandling-Klammervorrichtung) zum Halten eines Behälters für eine Behälterbehandlungsanlage offenbart. Die Klammervorrichtung weist ein Klammerarmpaar und eine Schwenkeinrichtung auf, die mit dem Klammerarmpaar verbunden ist und die das Klammerarmpaar relativ zueinander (z. B. greifzangenartig) verschwenkbar lagert. Die Klammervorrichtung weist ein (z. B. einziges) Drehelement auf, das (z. B. mittig) zwischen dem Klammerarmpaar (z. B. auf Höhe des Klammerarmpaares) angeordnet ist. In Abhängigkeit von einer Drehstellung des Drehelements ist das Klammerarmpaar durch magnetische Wechselwirkung (zum Beispiel magnetische Anziehung und/oder Abstoßung) zwischen dem Drehelement und dem Klammerarmpaar mittels der Schwenkeinrichtung relativ zueinander verschwenkbar.

Die Klammervorrichtung kann vorteilhaft eine berührungslose und somit verschleißlose Betätigung des Klammerarmpaares mittels des Drehelements ermöglichen. Dadurch kann die Lebensdauer der Klammervorrichtung erheblich erhöht werden. Kosten für Austausch und Wartungsarbeiten können entfallen oder zumindest verringert werden. Dadurch können auch Hygieneanforderungen besser erfüllt werden. Die Betätigungsmechanik mittels des Drehelements kann vorteilhaft auf einfache, zuverlässige und besonders langlebige Art und Weise in bestehende Klammervorrichtungen integriert bzw. implementiert werden.

In einem Ausführungsbeispiel ist das Klammerarmpaar durch magnetische Wechselwirkung zwischen dem Drehelement und dem Klammerarmpaar in eine Schließstellung verschwenkbar, und vorzugsweise darin haltbar. Alternativ oder zusätzlich ist das Klammerarmpaar durch magnetische Wechselwirkung zwischen dem Drehelement und dem Klammerarmpaar in eine Offenstellung verschwenkbar, und vorzugsweise darin haltbar. Damit kann durch eine Drehung des Drehelements ein Öffnen und/oder Schließen der Klammervorrichtung bewirkt werden.

In einem weiteren Ausführungsbeispiel ist das Drehelement in eine erste Drehstellung drehbar, in der das Klammerarmpaar zum Verschwenken des Klammerarmpaares in magnetischer Wechselwirkung mit dem Drehelement ist, vorzugsweise zum Verschwenken in eine Schließstellung. Bevorzugt kann das Drehelement so in der ersten Drehstellung ein berührungsloses und damit verschleißfreies Verschwenken des Klammerarmpaares bewirken.

In einem weiteren Ausführungsbeispiel ist das Drehelement in eine zweite Drehstellung drehbar, in der keine oder eine nur unwesentliche magnetische Wechselwirkung zwischen dem Drehelement und dem Klammerarmpaar besteht, und/oder in der das Klammerarmpaar mittels einer (z. B. elastischen, federnden oder magnetischen) Vorspanneinrichtung rückschwenkbar ist, vorzugsweise in eine Offenstellung. Vorteilhaft kann das Drehelement somit in der zweiten Drehstellung das Klammerarmpaar nicht zum Verschwenken beaufschlagen, sodass ein Rückschwenken des Klammerarmpaares ermöglicht wird.

In einer Ausführungsform ist das Drehelement in eine zweite Drehstellung drehbar, in der das Klammerarmpaar zum Rückschwenken des Klammerarmpaares in magnetischer Wechselwirkung mit dem Drehelement ist, vorzugsweise zum Rückschwenken in eine Offenstellung. Vorteilhaft kann das Drehelement so in der zweiten Drehstellung (ebenfalls) ein berührungsloses und damit verschleißfreies Rückschwenken des Klammerarmpaares bewirken.

In einer weiteren Ausführungsform sind die erste Drehstellung und die zweite Drehstellung in einem Bereich zwischen einer Vierteldrehung und einer halben Drehung des Drehelements verdreht zueinander bzw. erreichbar. Es kann vorzugsweise somit bereits eine vergleichsweise geringe Drehung des Drehelements ausreichen, um zwischen der ersten Drehstellung und der zweiten Drehstellung bzw. zwischen der Schließstellung und der Offenstellung zu wechseln. Dies kann die Möglichkeiten zum Bewirken der Drehung z. B. mittels mechanischer Betätigung oder Aktorbetätigung erweitern.

In einer weiteren Ausführungsform weist das Klammerarmpaar einen ersten Klammerarmkörper, einen (z. B. dem ersten Klammerkörper gegenüberliegenden) zweiten Klammerarmkörper, einen ersten Klammerarmmagneten (z. B. Permanentmagnet) und einen zweiten Klammerarmmagneten (z. B. Permanentmagnet) auf. Vorteilhaft kann mittels der Klammerarmmagnete ein Verschwenken der Klammerarmkörper zusammen mit den Klammerarmmagneten bewirkt werden.

In einer Ausführungsvariante ist der erste Klammerarmmagnet an dem ersten Klammerarmkörper angebracht (z. B. fest, lösbar, kraftschlüssig, formschlüssig, stoffschlüssig, verklebt, verschraubt und/oder verrastet) und zur magnetischen Wechselwirkung mit dem Drehelement angeordnet. Bevorzugt kann der erste Klammerarmmagnet durch magnetische Wechselwirkung mit dem Drehelement den ersten Klammerarmkörper verschwenken.

In einer weiteren Ausführungsvariante ist der zweite Klammerarmmagnet an dem zweiten Klammerkörper angebracht (z. B. fest, lösbar, kraftschlüssig, formschlüssig, stoffschlüssig, verklebt, verschraubt und/oder verrastet) und zur magnetischen Wechselwirkung mit dem Drehelement angeordnet. Bevorzugt kann der zweite Klammerarmmagnet durch magnetische Wechselwirkung mit dem Drehelement den zweiten Klammerarmkörper verschwenken.

Beispielsweise kann der erste Klammerarmmagnet dem Drehelement zugewandt sein, und/oder der zweite Klammerarmmagnet kann dem Drehelement zugewandt sein, und/oder der erste Klammerarmmagnet und der zweite Klammerarmmagnet können einander gegenüberliegen.

In einem Ausführungsbeispiel weist das Drehelement mindestens einen (z. B. quaderförmigen oder ringsegmentförmigen) Magneten (z. B. Permanentmagneten), vorzugsweise zwei (z. B. auf entgegengesetzten Seiten des Drehelements angeordnete) Magnete auf, der/die zur magnetischen Wechselwirkung mit dem Klammerarmpaar angeordnet ist/sind (z. B. in der ersten und/oder zweiten Drehstellung des Drehelements).

Beispielsweise können die zwei Magnete mit gleicher magnetischer Polarität in einer Radialrichtung nach außen bezüglich einer Drehachse des Drehelements ausgerichtet sein.

In einem weiteren Ausführungsbeispiel ist das Drehelement als eine (z. B. berührungslos wirkende) Nockenwelle mit zwei entgegengesetzt ausgerichteten Nocken, die durch den mindestens einen Magneten (z. B. Permanentmagneten) des Drehelements gebildet sind, ausgebildet. Vorteilhaft kann die berührungslos wirkende Nockenwelle eine zuverlässige und verschleißfreie Betätigung des Klammerarmpaares ermöglichen.

In einem weiteren Ausführungsbeispiel weist das Drehelement zwei weitere Magnete auf, die in einer zweiten Drehstellung des Drehelements in magnetischer Wechselwirkung mit dem Klammerarmpaar z. B. zum Rückschwenken des Klammerarmpaares sind. Vorteilhaft kann das Drehelement bewirken, dass das Klammerarmpaar in eine Offenstellung und in eine Schließstellung verschwenkt wird, vorzugsweise abhängig von einer Drehstellung des Drehelements. Dies kann bspw. ermöglichen, dass auf eine Vorspanneinrichtung zum Bewirken eines Rückschwenkens des Klammerarmpaares verzichtet werden kann.

In einer Ausführungsform sind die zwei Magnete und die zwei weiteren Magnete des Drehelements abwechselnd und/oder bezüglich einer Drehachse des Drehelements versetzt zueinander angeordnet, vorzugsweise versetzt in einem Bereich bis zu 90° (z. B. versetzt um rund 90°).

In einer weiteren Ausführungsform sind die zwei Magnete einerseits und die zwei weiteren Magnete andererseits mit umgekehrter magnetischer Polarität in einer Radialrichtung nach außen bezüglich einer Drehachse des Drehelements ausgerichtet. Vorteilhaft können die zwei Magnete und die zwei weiteren Magnete somit umgekehrte bzw. entgegengesetzte magnetische Wechselwirkungen mit dem Klammerarmpaar (z. B. den Klammerarmmagneten des Klammerarmpaares) bewirken.

In einem Ausführungsbeispiel weist die Klammervorrichtung ferner eine Grundplatte auf, an der das Klammerarmpaar mittels der Schwenkeinrichtung relativ zueinander (z. B. greifzangenartig) verschwenkbar gelagert ist, vorzugsweise mittels zweier Schwenkachsen der Schwenkeinrichtung. Bevorzugt können die Klammerarmkörper jeweils eine Aufnahme zum Aufnehmen einer der Schwenkachsen aufweisen.

In einem weiteren Ausführungsbeispiel weist die Klammervorrichtung ferner eine (z. B. elastische, federnde oder magnetische) Vorspanneinrichtung auf, die das Klammerarmpaar entgegen einem Verschwenken mittels der magnetischen Wechselwirkung zwischen dem Drehelement und dem Klammerarmpaar vorspannt, vorzugsweise in Richtung einer Offenstellung.

In einem weiteren Ausführungsbeispiel weist die Klammervorrichtung ferner einen (z. B. drehbaren oder schwenkbaren) Führungskonturfolger auf, der mit dem Drehelement zum Drehen des Drehelements verbunden ist (z. B. integral-einstückig). Dies kann bspw. eine besonders einfache und zuverlässige Betätigung des Drehelements ermöglichen, die bspw. ohne einen separaten Antrieb auskommen kann.

Optional kann die Klammervorrichtung ferner einen Anschlag aufweisen, der eine Drehbarkeit des Führungskonturfolgers und damit des Drehelements beschränkt. Vorteilhaft kann mittels des Anschlags bspw. die erste Drehstellung und/oder die zweite Drehstellung festgelegt sein. Alternativ oder zusätzlich kann durch den Anschlag mittels magnetischer Wechselwirkung mit dem Führungskonturfolger der Führungskonturfolger und damit das Drehelement in mindestens einer Drehstellung (z. B. erste Drehstellung und/oder die zweite Drehstellung) haltbar sein. Vorteilhaft kann der Führungskonturfolger und damit das Drehelement somit sicher in den gewünschten Drehstellungen gehalten bzw. gesichert werden. Dadurch kann bspw. eine höhere Produktionsgeschwindigkeit ermöglicht werden.

Beispielsweise kann der Anschlag als Magnet ausgeführt sein, einen Magnet aufweisen oder aus einem magnetischen Metall bestehen. Alternativ oder zusätzlich kann der Führungskonturfolger mindestens einen Magnet aufweisen oder aus einem magnetischen Metall bestehen.

Ein weiterer Aspekt der vorliegenden Offenbarung betrifft ein Drehelement für eine Klammervorrichtung, vorzugsweise wie hierin offenbart, zum Halten eines Behälters für eine Behälterbehandlungsanlage. Das Drehelement weist mindestens einen Magneten, vorzugsweise zwei auf entgegengesetzten Seiten des Drehelements angeordnete Magnete, auf. Vorzugsweise kann der mindestens eine Magnet zur magnetischen Wechselwirkung mit einem Klammerarmpaar der Klammervorrichtung angeordnet sein, z. B. an einem Außenumfang des Drehelements. Das Drehelement ist als eine berührungslos wirkende Nockenwelle mit zwei entgegengesetzt ausgerichteten Nocken, die durch den mindestens einen Magneten des Drehelements gebildet sind, ausgebildet. Vorteilhaft kann das Drehelement somit als Ersatzteil oder Nachrüstteil für eine Klammervorrichtung genutzt werden, um die bezüglich der Klammervorrichtung beschrieben Vorteile zu erzielen.

Es ist möglich, dass das Drehelement um Merkmale ergänzt ist, die hierin unter Bezugnahme auf die Klammervorrichtung beschrieben sind, z. B. den Führungskonturfolger, den Anschlag und/oder die zwei weiteren Magnete usw.

Ein weiterer Aspekt der vorliegenden Offenbarung betrifft eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Behälterbehandlungsanlage kann mindestens eine Klammervorrichtung zum Transportieren und/oder Halten eines Behälters aufweisen.

Beispielsweise kann die Klammervorrichtung an einen Förderer, z. B. einen Transportstern, oder eine Behälterbehandlungsmaschine, z. B. ein Füllerkarussell, der Behälterbehandlungsanlage gekoppelt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1A: eine schematische Draufsicht auf eine Klammervorrichtung in einer Offenstellung gemäß einem Ausführungsbeispiel der vorliegenden Offenbarung;
- Figur 1B: eine schematische Draufsicht auf die beispielhafte Klammervorrichtung in einer Schließstellung;
- Figur 2A: eine schematische Draufsicht auf einen ersten Klammerarm der beispielhaften Klammervorrichtung in einer Offenstellung;
- Figur 2B: eine schematische Draufsicht auf den ersten Klammerarm der beispielhaften Klammervorrichtung in einer Schließstellung;
- Figur 3A: eine schematische Draufsicht auf einen zweiten Klammerarm der beispielhaften Klammervorrichtung in einer Offenstellung;
- Figur 3B: eine schematische Draufsicht auf den zweiten Klammerarm der beispielhaften Klammervorrichtung in einer Schließstellung;
- Figur 4: eine schematische Draufsicht auf eine Klammervorrichtung in einer Schließstellung gemäß einem weiteren Ausführungsbeispiel der vorliegenden Offenbarung; und
- Figur 5: eine schematische Draufsicht auf eine Klammervorrichtung in einer Schließstellung gemäß einem weiteren anderen Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

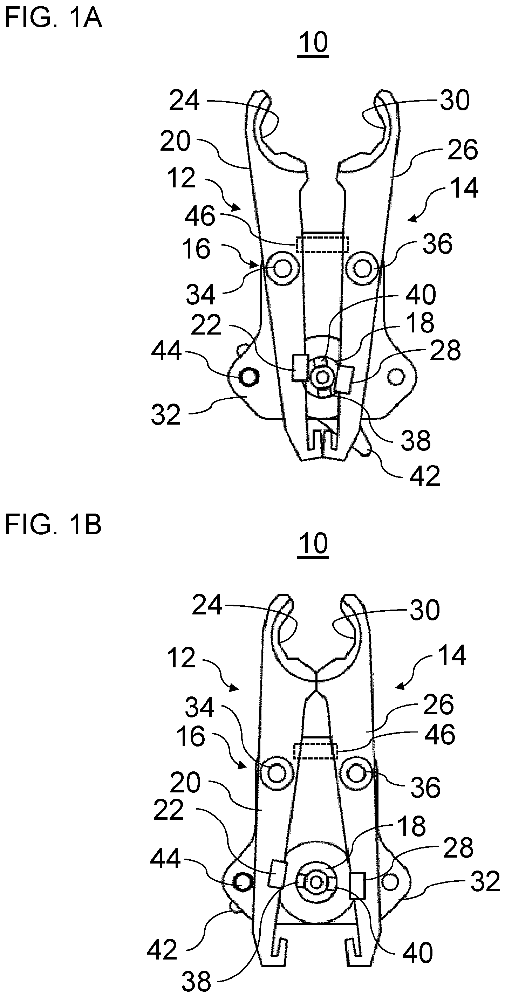

Die Figuren 1A und 1B zeigen eine Klammervorrichtung 10. Die Klammervorrichtung 10 kann zum Halten eines Behälters (z. B. Flasche) verwendet werden. Bevorzugt ist die Klammervorrichtung 10 als eine Behälterhals-Klammervorrichtung bzw. Neckhandling-Klammervorrichtung ausgeführt. Die Klammervorrichtung 10 kann in einer Behälterbehandlungsanlage zum Halten und Transportieren von Behältern eingesetzt werden, z. B. an einem Transportstern und/oder einem Behandlungskarussell (z. B. Füllerkarussell).

Die Klammervorrichtung 10 weist ein Klammerarmpaar 12, 14, eine Schwenkeinrichtung 16 und ein Drehelement 18 auf.

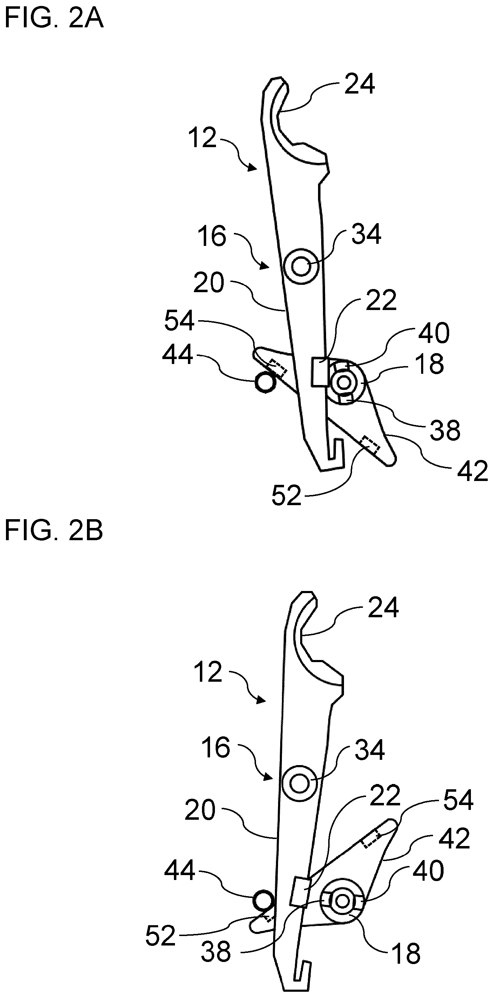

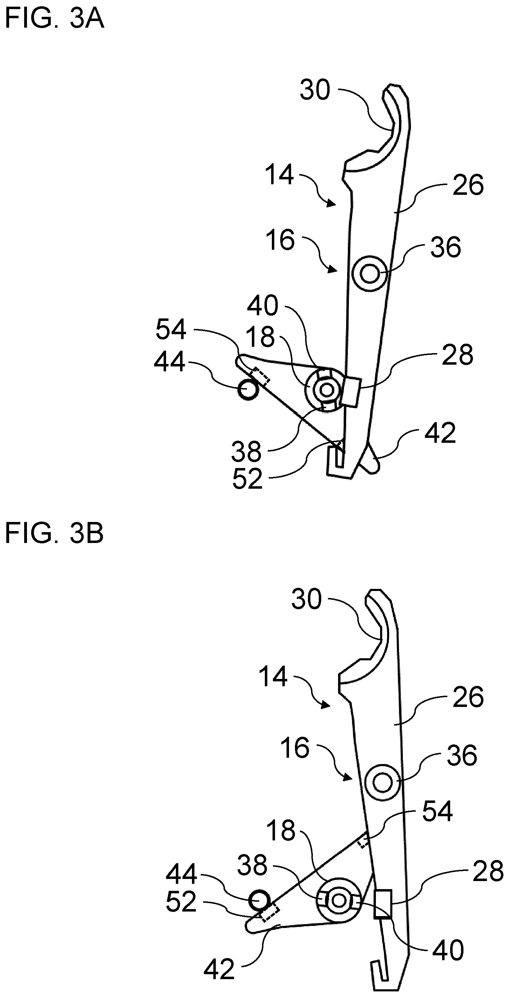

Nachfolgend ist die Klammervorrichtung 10 und deren Funktionsweise unter Bezugnahme auf die Figuren 1A bis 3B beschrieben. Die Figuren 1A und 1B zeigen die komplette Klammervorrichtung 10 in einer Offenstellung (Figur 1A) und in einer Schließstellung (Figur 1B). Die Figuren 2A und 2B zeigen einen ersten Klammerarm 12 mit der Schwenkeinrichtung 16 und dem Drehelement 18 in einer Offenstellung (Figur 2A) und in einer Schließstellung (Figur 2B). Die Figuren 3A und 3B zeigen einen zweiten Klammerarm 14 mit der Schwenkeinrichtung 16 und dem Drehelement 18 in einer Offenstellung (Figur 3A) und in einer Schließstellung (Figur 3B).

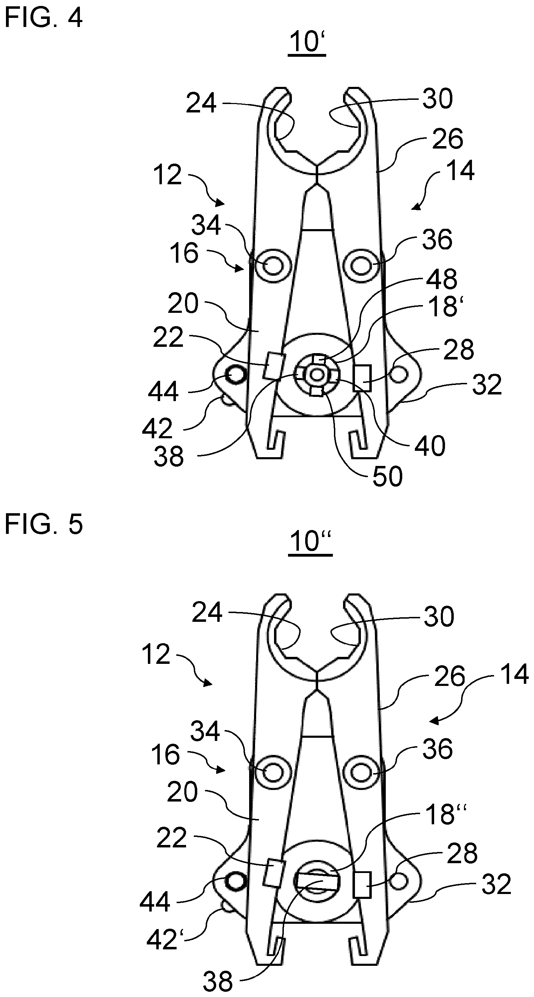

Das Klammerarmpaar 12, 14 ist mittels der Schwenkeinrichtung 16 und dem Drehelement 18 relativ zueinander verschwenkbar, insbesondere greifzangenartig. Das Klammerarmpaar 12, 14 ist mittels magnetischer Wechselwirkung mit dem Drehelement 18 in eine Schließstellung verschwenkbar. Alternativ oder zusätzlich ist es möglich, dass das Klammerarmpaar 12, 14 mittels magnetischer Wechselwirkung mit dem Drehelement 18 in eine Offenstellung verschwenkbar ist (vgl. beispielsweise Ausführungsform von Figur 4). Es ist möglich, dass beide Klammerarme 12, 14 oder nur einer der beiden Klammerarme 12 oder 14 verschwenkbar ist.

Der erste Klammerarm 12 des Klammerarmpaares 12, 14 weist einen ersten Klammerarmkörper 20 und einen ersten Klammerarmmagneten 22 auf.

Der erste Klammerarmkörper 20 ist länglich. Der erste Klammerarmkörper 20 weist einen ersten Greif- bzw. Klemmabschnitt 24 zum Klemmen eines Behälters, insbesondere an einem Behälterhals des Behälters, auf. Der erste Klemmabschnitt 24 kann an einem Endbereich des ersten Klammerarmkörpers 20 angeordnet sein. Der erste Klemmabschnitt 24 kann beispielsweise eine konkave Anlagefläche zur Anlage an den Behälter oder Behälterhals aufweisen.

Der erste Klammerarmmagnet 22 ist an dem ersten Klammerarmkörper 20 angebracht. Die Anbringung kann fest oder lösbar bzw. wechselbar sein. Die Anbringung kann beispielsweise formschlüssig, kraftschlüssig und/oder stoffschlüssig erfolgen. Bevorzugt ist der erste Klammerarmmagnet 22 an dem ersten Klammerarmkörper 20 angeklebt.

Der erste Klammerarmmagnet 22 ist an einer Innenseite des ersten Klammerarmkörpers 20 angeordnet. Der erste Klammerarmmagnet 22 ist dem Drehelement 18 zugewandt. Der erste Klammerarmmagnet 22 ist dem zweiten Klammerarm 14 zugewandt. Der erste Klammerarmmagnet 22 kann an einem dem ersten Klemmabschnitt 24 entgegengesetzten Endbereich des ersten Klammerarmkörpers 20 angeordnet sein. Beispielsweise kann der erste Klammerarmmagnet 22 und der erste Klemmabschnitt 24 auf gegenüberliegenden Seiten bezüglich der Schwenkeinrichtung 16 angeordnet sein. Allerdings sind auch andere Anordnungen des ersten Klammerarmmagneten 22 möglich, zum Beispiel auf derselben Seite bezüglich der Schwenkeinrichtung 16 und/oder nicht an einem Endbereich des ersten Klammerarmkörpers 20.

Der erste Klammerarmmagnet 22 ist bevorzugt ein Permanentmagnet. Der erste Klammerarmmagnet 22 kann dem Drehelement 18 mit seinem magnetischen Nordpol oder seinem magnetischen Südpol zugewandt sein. Der erste Klammerarmmagnet 22 kann beispielsweise quaderförmig oder ringsegmentförmig sein.

Der zweite Klammerarm 14 kann bevorzugt im Wesentlichen wie der erste Klammerarm 12 ausgeführt sein. Dementsprechend kann der zweite Klammerarm 14 einen zweiten Klammerarmkörper 26, einen zweiten Klammerarmmagneten 28 und einen zweiten Klemmabschnitt 30 aufweisen, die bevorzugt analog dem ersten Klammerarmkörper 20, dem ersten Klammerarmmagnet 22 bzw. dem ersten Klemmabschnitt 24 ausgeführt und/oder angeordnet sein können. Der zweite Klammerarm 14 kann im Wesentlichen spiegelbildlich zu dem ersten Klammerarm 12 ausgeführt sein. Die Klammerarmmagnete 22, 28 können mit unterschiedlichen magnetischen Polaritäten oder mit gleichen magnetischen Polaritäten hin zu dem Drehelement 18 gerichtet sein.

Die Schwenkeinrichtung 16 ist mit den Klammerarmen 12, 14, insbesondere den Klammerarmkörpern 20, 26 verbunden, vorzugsweise direkt. Die Schwenkeinrichtung 16 lagert die Klammerarme 12, 14 verschwenkbar auf einer Grundplatte 32. Die Grundplatte 32 kann beispielsweise oberhalb oder unterhalb der Klammerarme 12, 14 angeordnet sein. Die Grundplatte 32 kann parallel zu den Klammerarmen 12, 14 ausgerichtet sein.

Die Schwenkeinrichtung 16 weist eine erste Schwenkachse 34 und eine zweite Schwenkachse 36 auf. Die Schwenkachsen 34, 36 sind parallel beabstandet zueinander angeordnet. Die erste Schwenkachse 34 ist mit dem ersten Klammerarm 12 und der Grundplatte 32 verbunden. Die erste Schwenkachse 34 ist in einer Aufnahme des ersten Klammerarmkörpers 20 aufgenommen. Die zweite Schwenkachse 36 ist mit dem zweiten Klammerarm 14 und der Grundplatte 32 verbunden.

Die zweite Schwenkachse 36 ist in einer Aufnahme des zweiten Klammerarmkörpers 26 aufgenommen. Es ist auch möglich, dass die Schwenkeinrichtung 16 beispielsweise nur eine einzige Schwenkachse umfasst, mittels der einer oder beide der Klammerarme 12, 14 verschwenkbar gelagert sind.

Das Drehelement 18 weist einen ersten Magneten 38 und einen zweiten Magneten 40 auf. Der erste Magnet 38 und der zweite Magnet 40 sind bezüglich einer Drehachse des Drehelements 18 auf entgegengesetzten Seiten des Drehelements 18 angeordnet. Bevorzugt können der erste Magnet 38 und der zweite Magnet 40 bezüglich einer Drehachse des Drehelements 18 um rund 180° versetzt zueinander angeordnet sein. Der erste Magnet 38 und der zweite Magnet 40 sind beabstandet zueinander angeordnet. Der erste Magnet 38 und der zweite Magnet 40 können bevorzugt an einem Umfang, insbesondere einem Außenumfang, des Drehelements 18 angeordnet sein.

Der erste Magnet 38 und der zweite Magnet 40 sind bevorzugt Permanentmagnete. Der erste Magnet 38 und der zweite Magnet 40 können bevorzugt so ausgerichtet sein, dass ein magnetischer Nordpol oder Südpol des jeweiligen Magneten 38 oder 40 in einer Radialrichtung nach außen zeigt. Es ist möglich, dass das Drehelement mehr oder weniger als die beiden Magnete 38, 40 aufweist (vgl. beispielsweise Ausführungsformen von Figur 4 und 5). Die Magnete 38, 40 können beispielsweise quaderförmig oder ringsegmentförmig ausgeführt sein.

Das Drehelement 18 ist drehbar gelagert, vorzugsweise in oder an der Grundplatte 32. Eine Drehung des Drehelements 18 kann durch einen Führungskonturfolger 42 bewirkt werden. Der Führungskonturfolger 42 kann bspw. dreieck-, trapez-, platten- oder stabförmig sein.

Der Führungskonturfolger 42 ist mit dem Drehelement 18 verbunden, insbesondere drehfest. Beispielsweise kann der Führungskonturfolger 42 an einem Ende des Drehelements 18 angeordnet sein. Der Führungskonturfolger 42 und das Drehelement 18 können integral-einstückig miteinander verbunden sein. Der Führungskonturfolger 42 kann im Betrieb einer Führungskontur (nicht dargestellt) folgen. Die Führungskontur kann beispielsweise als eine Kulissenführung oder eine Steuerkurve ausgeführt sein. Die Führungskontur kann ein Drehen bzw. Schwenken des Führungskonturfolgers 42 und damit ein Drehen des Drehelements 18 bewirken. Es ist allerdings auch möglich, dass das Drehelement 18 auf andere Weise gedreht wird, zum Beispiel mittels einer anderen mechanischen Betätigung oder eines Aktors.

Eine Drehung des Führungskonturfolgers 42 kann durch einen Anschlag 44 einseitig oder beidseitig begrenzt sein. Der Anschlag 44 kann an der Grundplatte 32 befestigt sein, zum Beispiel in einer Aufnahme der Grundplatte 32. Der Anschlag 44 kann beispielsweise stabförmig und/oder mit Tef-Ion beschichtet sein.

Das Drehelement 18 weist eine Drehachse auf, um die das Drehelement 18 drehbar ist. Die Drehachse des Drehelements 18 verläuft bevorzugt parallel zu den Schwenkachsen 34, 36. Die Drehachse des Drehelements 18 verläuft bevorzugt senkrecht zu einer Ausrichtung der Grundplatte 32.

Das Drehelement 18 ist zumindest zwischen einer ersten Drehstellung und einer zweiten Drehstellung drehbar, insbesondere hin- und herdrehbar. Die erste Drehstellung ist in den Figuren 1B, 2B und 3B dargestellt. Die zweite Drehstellung ist in den Figuren 1A, 2A und 3A dargestellt. Der Anschlag 44 kann die erste Drehstellung und/oder die zweite Drehstellung festlegen.

In der ersten Drehstellung (vgl. Figuren 1B, 2B und 3B) ist der erste Magnet 38 in magnetischer Wechselwirkung mit dem ersten Klammerarmmagneten 22, und der zweite Magnet 40 ist in magnetischer Wechselwirkung mit dem zweiten Klammerarmmagneten 28. Die Magnete 22 und 38 sind in der ersten Drehstellung so zueinander ausgerichtet, dass sich die gleichen magnetischen Pole der Magnete 22 und 38 gegenüberliegen. Beispielsweise ist der magnetische Nordpol des Klammerarmmagneten 22 dem magnetischen Nordpol des Magneten 38 zugewandt. Alternativ kann der magnetische Südpol des Klammerarmmagneten 22 dem magnetischen Südpol des Magneten 38 zugewandt sein. Ebenfalls sind die Magnete 28 und 40 in der ersten Drehstellung so zueinander ausgerichtet, dass sich die gleichen magnetischen Pole der Magnete 28 und 40 gegenüberliegen (also Nordpol gegenüber Nordpol oder Südpol gegenüber Südpol).

In der ersten Drehstellung (vgl. Figuren 1B, 2B und 3B) stoßen sich die Magnete 22 und 38 voneinander ab. Die Magnete 28 und 40 stoßen sich ebenfalls voneinander ab. Unter dieser magnetischen Wechselwirkung bewegen sich die Klammerarme 12 und 14 weg von dem Drehelement 18. Die Bewegung des Klammerarmpaares 12, 14 wird von der Schwenkeinrichtung 16 geführt. Der erste Klammerarm 12 schwenkt um die erste Schwenkachse 34. Der zweite Klammerarm 14 schwenkt um die zweite Schwenkachse 36. Die Klemmabschnitte 24, 30 schwenken aufeinander zu. Die Klammervorrichtung 10 wird in eine Schließstellung verschwenkt. Die erste Drehstellung des Drehelements 18 bewirkt somit eine Schließstellung der Klammervorrichtung 10 durch magnetische Wechselwirkung zwischen den Magneten 22 und 38 sowie zwischen den Magneten 28, 40. Es ist auch möglich, dass die Klammervorrichtung 10 anders konfiguriert ist, sodass sich beispielsweise die Magnete 22 und 38 sowie 28 und 40 jeweils paarweise anziehen. Die erste Drehstellung würde somit eine Offenstellung der Klammervorrichtung 10 bewirken können.

In der zweiten Drehstellung (vgl. Figuren 1A, 2A und 3A) besteht keine oder im Wesentlichen keine magnetische Wechselwirkung zwischen den Magneten 22 und 38 sowie zwischen den Magneten 28 und 40. Die Magnete 28 und 38 stoßen sich nicht oder zumindest nicht wesentlich voneinander ab. Die Magnete 28 und 40 stoßen sich ebenfalls nicht oder zumindest nicht wesentlich voneinander ab. Die zweite Drehstellung kann beispielsweise um eine Vierteldrehung des Drehelements 18 bzw. um rund 90° bezüglich einer Drehachse des Drehelements 18 verdreht zu der ersten Drehstellung angeordnet sein.

In der zweiten Drehstellung kann eine Vorspanneinrichtung 46 ein Rückschwenken des Klammerarmpaares 12, 14 bewirken. In der zweiten Drehstellung ist die durch die Vorspanneinrichtung 46 bewirkte Vorspannkraft zum Rückschwenken des Klammerarmpaares 12, 14 größer als eine gegebenenfalls noch vorhandene entgegengesetzt wirkende Magnetkraft, die zwischen dem Drehelement 18 und dem Klammerarmpaar 12, 14 wirkt. Es ist auch möglich, dass in der zweiten Drehstellung eine zwischen dem Drehelement 18 und dem Klammerarmpaar 12, 14 wirkende Magnetkraft so gerichtet ist, dass die durch die Vorspanneinrichtung 46 bewirkte Vorspannkraft unterstützt wird.

Die Vorspanneinrichtung 46 kann separat von dem Drehelement 18 ausgebildet sein. Die Vorspanneinrichtung 46 kann, wie in den Figuren 1A, 2A und 3A dargestellt, ein Rückschwenken des Klammerarmpaares 12, 14 in eine Offenstellung bewirken. Alternativ ist es allerdings beispielsweise auch möglich, dass die Vorspanneinrichtung 46 ein Rückschwenken des Klammerarmpaares 12, 14 in eine Schließstellung bewirken kann (nicht in den Figuren dargestellt).

Die Vorspanneinrichtung 46 kann zwischen den Klammerarmen 12 und 14 wirkend angeordnet sein. Die Vorspanneinrichtung 46 kann beispielsweise an jeglicher Position zwischen den Klammerarmen 12, 14 angeordnet sein, zum Beispiel in einem Abschnitt längs der Klammerarmkörper 20, 26 zwischen den Klemmabschnitten 24, 30 und der Schwenkeinrichtung 16 oder zwischen der Schwenkeinrichtung 16 und einem den Klemmabschnitten 24, 30 entgegengesetzten Ende der Klammerarme 12, 14 bzw. der Klammerarmkörper 20, 26.

Die Vorspanneinrichtung 46 kann beispielsweise durch ein elastisches Element, wie eine Schraubenfeder (am Beispiel Zugschraubenfeder oder Druckschraubenfeder) ausgebildet sein. Die Vorspanneinrichtung 46 kann allerdings auch auf einem anderen Wirkprinzip beruhen, zum Beispiel auf einer magnetischen Wechselwirkung zwischen zwei (z. B. Permanent-) Magneten, wobei ein Magnet der Vorspanneinrichtung 46 dem ersten Klammerarm 12 zugeordnet ist und der andere Magnet der Vorspanneinrichtung 46 dem zweiten Klammerarm 14 zugeordnet ist.

Das Drehelement 18 kann als eine berührungslos bzw. magnetisch wirkende Nockenwelle genutzt werden. Ein erster Nocken ist durch den ersten Magneten 38 gebildet. Ein zweiter Nocken ist durch den zweiten Magneten 40 gebildet. In der ersten Drehstellung ist der erste Nocken, also der erste Magnet 38, dem ersten Klammerarm 12 direkt zugewandt. Der zweite Nocken, also der zweite Magnet 40, ist dem zweiten Klammerarm 14 direkt zugewandt. Der erste Nocken führt in der ersten Drehstellung des Drehelements 18 zu einem Wegschwenken des ersten Klammerarms 12. Der zweite Nocken führt in der ersten Drehstellung des Drehelements 18 zu einem Wegschwenken des zweiten Klammerarms 14. In der zweiten Drehstellung des Drehelements 18 ist der erste Nocken weg von dem ersten Klammerarm 12 gerichtet. Der zweite Nocken ist weg von dem zweiten Klammerarm 14 gerichtet. Das Klammerarmpaar 12,14 kann zurückschwenken, vorzugsweise mittels der Vorspanneinrichtung 46.

Es ist möglich, dass der Anschlag 44 in magnetische Wechselwirkung mit dem Führungskonturfolger 42 treten kann, um den Führungskonturfolger 42 in der ersten und/oder zweiten Drehstellung zu halten bzw. zu sichern. Hierzu kann der Anschlag 44 bspw. aus einem magnetischen Metall bestehen. Der Führungskonturfolger 42 kann bspw. einen Magnet 52 und/oder einen Magnet 54 aufweisen. Die Magnete 52, 54 sind bevorzugt Permanentmagnete. Der Magnet 52 kann derart angeordnet sein, dass in der ersten Drehstellung eine magnetische Anziehung zu dem Anschlag 44 besteht (siehe Figuren 2B und 3B). Der Magnet 54 kann derart angeordnet sein, dass in der zweiten Drehstellung (siehe Figuren 2A und 3A) eine magnetische Anziehung zu dem Anschlag 44 besteht.

Es ist auch möglich, dass der Anschlag 44 einen Magnet aufweist oder als ein Magnet ausgeführt ist, der den Magnet 52 in der ersten Drehstellung und/oder den Magnet 54 in der zweiten Drehstellung anzieht. Es ist ebenfalls möglich, dass der Führungskonturfolger 42 aus einem magnetischen Metall besteht, das von einem Magnet des Anschlags 44 in der ersten Drehstellung und/oder der zweiten Drehstellung angezogen wird.

Die Figur 4 zeigt eine gegenüber den Figuren 1A bis 3B modifizierte Ausführungsform. Die Klammervorrichtung 10' der Figur 4 ist in der Schließstellung dargestellt. Bei der Klammervorrichtung 10' kann auf eine separate Vorspanneinrichtung verzichtet werden, wenn gewünscht.

Das Drehelement 18' weist im Vergleich zum Drehelement 18 der Figuren 1A bis 3B zwei weitere Magnete 48, 50 auf. Die Magnete 38, 40, 48, 50 sind an einem Umfang des Drehelements 18' versetzt zueinander angeordnet, insbesondere in einem Abstand von rund 90° bezüglich einer Drehachse des Drehelements 18'.

Die zwei Magnete 38, 40 einerseits und die zwei weiteren Magnete 48, 50 andererseits sind mit umgekehrter magnetischer Polarität in einer Radialrichtung nach außen bezüglich einer Drehachse des Drehelements 18' ausgerichtet. Beispielsweise zeigen die magnetischen Nordpole der Magnete 38, 40 in einer Radialrichtung bezüglich einer Drehachse des Drehelements 18' nach außen, wohingegen die magnetischen Südpole der Magnete 48, 50 in der Radialrichtung bezüglich der Drehachse des Drehelements 18' nach außen zeigen, oder umgekehrt.

In der ersten Drehstellung des Drehelements 18' liegen sich die Magnete 38 und 22 sowie die Magnete 40 und 28 gegenüber (dargestellt in Figur 4). In der zweiten Drehstellung des Drehelements 18' liegen sich die Magnete 48 und 22 sowie die Magnete 50 und 28 gegenüber (nicht dargestellt in Figur 4). Die Magnete 48, 50 haben in der zweiten Drehstellung des Drehelements 18' eine umgekehrte magnetische Wirkung auf die Klammerarmmagnete 22, 28 als die Magnete 38, 40 in der ersten Drehstellung des Drehelements 18 auf die Klammerarmmagnete 22, 28 haben.

In der ersten Drehstellung des Drehelements 18' besteht eine magnetische Wechselwirkung zwischen den Magneten 38 und 22 und zwischen den Magneten 40 und 28, wie bezüglich der Figuren 1A bis 3B beispielhaft beschrieben ist. In der zweiten Drehstellung des Drehelements 18' besteht eine magnetische Wechselwirkung zwischen den Magneten 48 und 22 und zwischen den Magneten 50 und 28 (nicht dargestellt in Figur 4). In der ersten Drehstellung stoßen sich die Magnete 38 und 22 und die Magnete 40 und 28 voneinander ab. Das Klammerarmpaar 12, 14 wird in eine Schließstellung verschwenkt. In der zweiten Drehstellung ziehen sich die Magnete 48 und 22 und die Magnete 50 und 28 an. Das Klammerarmpaar 12, 14 wird eine Offenstellung verschwenkt.

Die Figur 5 zeigt eine weitere gegenüber den Figuren 1A bis 3B modifizierte Ausführungsform. Die Klammervorrichtung 10" der Figur 5 ist in der Schließstellung dargestellt. Bei der Klammervorrichtung 10" kann ebenfalls auf eine separate Vorspanneinrichtung verzichtet werden, wenn gewünscht.

Das Drehelement 18" weist nur einen Magneten 38 auf. Der eine Magnet 38 kann so angeordnet sein, dass sein magnetischer Nordpol und sein magnetischer Südpol bezüglich einer Drehachse des Drehelements 18" auf entgegengesetzten Seiten des Drehelements 18 angeordnet sind. Der magnetische Nordpol des Magnets 38 zeigt in einer Radialrichtung weg von einer Drehachse des Drehelements 18". Der magnetische Südpol des Magnets 38 zeigt in einer entgegengesetzten Radialrichtung weg von der Drehachse des Drehelements 18". Die Klammerarmmagnete 22, 28 sind mit unterschiedlichen magnetischen Polaritäten hin zu dem Drehelement 18" gerichtet.

In der ersten Drehstellung stößt der Magnet 38 beide Klammerarmmagnete 22, 28 ab. Beispielsweise ist in der ersten Drehstellung der magnetische Nordpol des Magneten 38 dem magnetischen Nordpol des ersten Klammerarmmagnet 22 zugewandt, und der magnetische Südpol des Magneten 38 ist dem magnetischen Südpol des Klammerarmmagneten 28 zugewandt, oder umgekehrt. Das Klammerarmpaar 12, 14 wird in eine Schließstellung verschwenkt.

In einer zweiten Drehstellung (nicht in Figur 5 dargestellt) zieht der Magnet 38 beide Klammerarmmagnete 22, 28 an. Beispielsweise ist in der ersten Drehstellung der magnetische Südpol des Magneten 38 dem magnetischen Nordpol des ersten Klammerarmmagnet 22 zugewandt, und der magnetische Nordpol des Magneten 38 ist dem magnetischen Südpol des Klammerarmmagneten 28 zugewandt, oder umgekehrt. Das Klammerarmpaar 12, 14 wird in eine Offenstellung verschwenkt.

Die zweite Drehstellung kann im Ausführungsbeispiel der Figur 5 um eine halbe Drehung des Drehelements 18 bzw. um 180° bezüglich einer Drehachse des Drehelements 18" verdreht zu der ersten Drehstellung angeordnet sein. Dementsprechend kann bspw. eine Form des Führungskonturfolgers 42' angepasst werden, um einen Kontakt mit dem Anschlag 44 zum Festlegen der ersten und/oder zweiten Drehstellung entsprechend festzulegen.

Es wäre beispielsweise auch möglich, dass das Ausführungsbeispiel der Figur 5 derart modifiziert wird, dass die erste Drehstellung und die zweite Drehstellung nur um eine Vierteldrehung des Drehelements bzw. um rund 90° bezüglich einer Drehachse des Drehelements 18" verdreht zueinander angeordnet sind. In einem solchen Ausführungsbeispiel ist bevorzugt wiederum eine separate Vorspanneinrichtung vorgesehen, um das Klammerarmpaar 12, 14 zurück zu verschwenken, zum Beispiel in eine Offenstellung oder eine Schließstellung.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Klammerarmpaares, der Schwenkeinrichtung und des Drehelements des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Klammervorrichtung
- 12: Erster Klammerarm
- 14: Zweiter Klammerarm
- 16: Schwenkeinrichtung
- 18: Drehelement
- 20: Erster Klammerarmkörper
- 22: Erster Klammerarmmagnet
- 24: Erster Klemmabschnitt
- 26: Zweiter Klammerarmkörper
- 28: Zweiter Klammerarmmagnet
- 30: Zweiter Klemmabschnitt
- 32: Grundplatte
- 34: Erste Schwenkachse
- 36: Zweite Schwenkachse
- 38: Erster Magnet
- 40: Zweiter Magnet
- 42: Führungskonturfolger
- 44: Anschlag
- 46: Vorspanneinrichtung
- 48: Erster weiterer Magnet
- 50: Zweiter weiterer Magnet
- 52: Magnet
- 54: Magnet

## Patentansprüche

1. Klammervorrichtung (10) zum Halten eines Behälters für eine Behälterbehandlungsanlage, aufweisend:
ein Klammerarmpaar (12, 14);
eine Schwenkeinrichtung (16), die mit dem Klammerarmpaar (12, 14) verbunden ist und das Klammerarmpaar (12, 14) relativ zueinander verschwenkbar lagert; und
ein Drehelement (18), das zwischen dem Klammerarmpaar (12, 14) angeordnet ist, wobei das Klammerarmpaar (12, 14) in Abhängigkeit von einer Drehstellung des Drehelements (18) durch magnetische Wechselwirkung zwischen dem Drehelement (18) und dem Klammerarmpaar (12, 14) mittels der Schwenkeinrichtung (16) relativ zueinander verschwenkbar ist,
**dadurch gekennzeichnet, dass**:
das Drehelement (18) eine Drehachse aufweist, die im Wesentlichen parallel zu mindestens einer Schwenkachse (34, 36) der Schwenkeinrichtung (16) verläuft; und/oder
eine Drehung des Drehelements (18) durch einen Anschlag (44) begrenzt ist.

2. Klammervorrichtung (10) nach Anspruch 1, wobei:
das Klammerarmpaar (12, 14) durch magnetische Wechselwirkung zwischen dem Drehelement (18) und dem Klammerarmpaar (12, 14) in eine Schließstellung verschwenkbar, und vorzugsweise darin haltbar, ist; und/oder
das Klammerarmpaar (12, 14) durch magnetische Wechselwirkung zwischen dem Drehelement (18) und dem Klammerarmpaar (12, 14) in eine Offenstellung verschwenkbar, und vorzugsweise darin haltbar, ist.

3. Klammervorrichtung (10) nach Anspruch 1 oder Anspruch 2, wobei:
das Drehelement (18) in eine erste Drehstellung drehbar ist, in der das Klammerarmpaar (12, 14) zum Verschwenken des Klammerarmpaares (12, 14) in magnetischer Wechselwirkung mit dem Drehelement (18) ist.

4. Klammervorrichtung (10) nach einem der vorherigen Ansprüche, wobei:
das Drehelement (18) in eine zweite Drehstellung drehbar ist, in der keine oder eine nur unwesentliche magnetische Wechselwirkung zwischen dem Drehelement (18) und dem Klammerarmpaar (12, 14) besteht, und/oder in der das Klammerarmpaar (12, 14) mittels einer Vorspanneinrichtung rückschwenkbar ist; oder
das Drehelement (18) in eine zweite Drehstellung drehbar ist, in der das Klammerarmpaar (12, 14) zum Rückschwenken des Klammerarmpaares (12, 14) in magnetischer Wechselwirkung mit dem Drehelement (18) ist.

5. Klammervorrichtung (10) nach Anspruch 3 und Anspruch 4, wobei:
die erste Drehstellung und die zweite Drehstellung in einem Bereich zwischen einer Vierteldrehung und einer halben Drehung des Drehelements (18) verdreht zueinander sind.

6. Klammervorrichtung (10) nach einem der vorherigen Ansprüche, wobei:
das Klammerarmpaar (12, 14) einen ersten Klammerarmkörper (20), einen zweiten Klammerarmkörper (26), einen ersten Klammerarmmagneten (22) und einen zweiten Klammerarmmagneten (28) aufweist;
der erste Klammerarmmagnet (22) an dem ersten Klammerarmkörper (20) angebracht und zur magnetischen Wechselwirkung mit dem Drehelement (18) angeordnet ist; und
der zweite Klammerarmmagnet (28) an dem zweiten Klammerkörper (26) angebracht und zur magnetischen Wechselwirkung mit dem Drehelement (18) angeordnet ist.

7. Klammervorrichtung (10) nach einem der vorherigen Ansprüche, wobei:
das Drehelement (18) mindestens einen Magneten (38, 40), vorzugsweise zwei auf entgegengesetzten Seiten des Drehelements (18) angeordnete Magnete (38, 40), aufweist, der zur magnetischen Wechselwirkung mit dem Klammerarmpaar (12, 14) angeordnet ist.

8. Klammervorrichtung (10) nach Anspruch 7, wobei:
das Drehelement (18) als eine berührungslos wirkende Nockenwelle mit zwei entgegengesetzt ausgerichteten Nocken, die durch den mindestens einen Magneten (38, 40) des Drehelements (18) gebildet sind, ausgebildet ist.

9. Klammervorrichtung (10) nach Anspruch 7 oder Anspruch 8, wobei:
das Drehelement (18) zwei weitere Magnete (48, 50) aufweist, die in einer zweiten Drehstellung des Drehelements (18) in magnetischer Wechselwirkung mit dem Klammerarmpaar (12, 14) zum Rückschwenken des Klammerarmpaares (12, 14) sind.

10. Klammervorrichtung (10) nach Anspruch 9, wobei:
die zwei Magnete (38, 40) und die zwei weiteren Magnete (48, 50) des Drehelements (18) abwechselnd und/oder bezüglich einer Drehachse des Drehelements (18) versetzt zueinander angeordnet sind, vorzugsweise versetzt in einem Bereich bis zu 90°; und/oder
die zwei Magnete (38, 40) einerseits und die zwei weiteren Magnete (48, 50) andererseits mit umgekehrter magnetischer Polarität in einer Radialrichtung nach außen bezüglich einer Drehachse des Drehelements (18) ausgerichtet sind.

11. Klammervorrichtung (10) nach einem der vorherigen Ansprüche, ferner aufweisend:
eine Grundplatte (32), an der das Klammerarmpaar (12, 14) mittels der Schwenkeinrichtung (16) relativ zueinander verschwenkbar gelagert ist, vorzugsweise mittels zweier Schwenkachsen (34, 36) der Schwenkeinrichtung (16).

12. Klammervorrichtung (10) nach einem der vorherigen Ansprüche, ferner aufweisend:
eine Vorspanneinrichtung (46), die das Klammerarmpaar (12, 14) entgegen einem Verschwenken mittels der magnetischen Wechselwirkung zwischen dem Drehelement (18) und dem Klammerarmpaar (12, 14) vorspannt.

13. Klammervorrichtung (10) nach einem der vorherigen Ansprüche, ferner aufweisend:
einen Führungskonturfolger (42), der mit dem Drehelement (18) zum Drehen des Drehelements (18) verbunden ist; und optional
der Anschlag (44) eine Drehbarkeit des Führungskonturfolgers (42) und damit des Drehelements (18) beschränkt und/oder durch den Anschlag (44) mittels magnetischer Wechselwirkung mit dem Führungskonturfolger (42) der Führungskonturfolger (42) und damit das Drehelement (18) in mindestens einer Drehstellung haltbar ist.

## Claims

1. A clamping apparatus (10) for holding a container for a container processing system, comprising:
a pair of clamping arms (12, 14);
a pivoting device (16) which is connected to the pair of clamping arms (12, 14) and mounts the pair of clamping arms (12, 14) so as to be pivotable relative to one another; and
a rotary element (18) which is arranged between the pair of clamping arms (12, 14), wherein the pair of clamping arms (12, 14) can be pivoted relative to one another by means of the pivoting device (16), depending on a rotary position of the rotary element (18), by magnetic interaction between the rotary element (18) and the pair of clamping arms (12, 14),
**characterized in that:**
the rotary element (18) has an axis of rotation which runs substantially in parallel with at least one pivot shaft (34, 36) of the pivoting device (16); and/or
a rotation of the rotary element (18) is delimited by a stop (44).

2. The clamping apparatus (10) according to claim 1, wherein:
the pair of clamping arms (12, 14) can be pivoted into a closed position by magnetic interaction between the rotary element (18) and the pair of clamping arms (12, 14), and can preferably be held in said position; and/or
the pair of clamping arms (12, 14) can be pivoted into an open position by magnetic interaction between the rotary element (18) and the pair of clamping arms (12, 14), and can preferably be held in said position.

3. The clamping apparatus (10) according to claim 1 or claim 2, wherein:
the rotary element (18) can be rotated into a first rotary position in which the pair of clamping arms (12, 14) is in magnetic interaction with the rotary element (18) for pivoting the pair of clamping arms (12, 14).

4. The clamping apparatus (10) according to any of the preceding claims, wherein:
the rotary element (18) can be rotated into a second rotary position in which there is no or only insubstantial magnetic interaction between the rotary element (18) and the pair of clamping arms (12, 14), and/or in which the pair of clamping arms (12, 14) can be pivoted back by means of a biasing device; or
the rotary element (18) can be rotated into a second rotary position in which the pair of clamping arms (12, 14) is in magnetic interaction with the rotary element (18) for pivoting the pair of clamping arms (12, 14) back.

5. The clamping apparatus (10) according to claim 3 and claim 4, wherein:
the first rotary position and the second rotary position are rotated relative to one another in a range between a quarter rotation and a half rotation of the rotary element (18).

6. The clamping apparatus (10) according to any of the preceding claims, wherein:
the pair of clamping arms (12, 14) has a first clamping arm body (20), a second clamping arm body (26), a first clamping arm magnet (22) and a second clamping arm magnet (28);
the first clamping arm magnet (22) is attached to the first clamping arm body (20) and arranged for magnetic interaction with the rotary element (18); and
the second clamping arm magnet (28) is attached to the second clamping body (26) and arranged for magnetic interaction with the rotary element (18).

7. The clamping apparatus (10) according to any of the preceding claims, wherein:
the rotary element (18) has at least one magnet (38, 40), preferably two magnets (38, 40) arranged on opposite sides of the rotary element (18), which is arranged for magnetic interaction with the pair of clamping arms (12, 14).

8. The clamping apparatus (10) according to claim 7, wherein:
the rotary element (18) is designed as a contactless camshaft having two oppositely aligned cams which are formed by the at least one magnet (38, 40) of the rotary element (18).

9. The clamping apparatus (10) according to claim 7 or claim 8, wherein:
the rotary element (18) has two additional magnets (48, 50) which, in a second rotary position of the rotary element (18), are in magnetic interaction with the pair of clamping arms (12, 14) for pivoting the pair of clamping arms (12, 14) back.

10. The clamping apparatus (10) according to claim 9, wherein:
the two magnets (38, 40) and the two additional magnets (48, 50) of the rotary element (18) are arranged alternately and/or offset from one another with respect to an axis of rotation of the rotary element (18), preferably offset in a range of up to 90°; and/or
the two magnets (38, 40) and the two additional magnets (48, 50) are aligned with reversed magnetic polarity in a radially outward direction with respect to an axis of rotation of the rotary element (18).

11. The clamping apparatus (10) according to any of the preceding claims, further comprising:
a base plate (32) on which the pair of clamping arms (12, 14) is mounted so as to be pivotable relative to one another by means of the pivoting device (16), preferably mounted by means of two pivot shafts (34, 36) of the pivoting device (16).

12. The clamping apparatus (10) according to any of the preceding claims, further comprising:
a biasing device (46) which biases the pair of clamping arms (12, 14) against pivoting by means of the magnetic interaction between the rotary element (18) and the pair of clamping arms (12, 14).

13. The clamping apparatus (10) according to any of the preceding claims, further comprising:
a guide contour follower (42) which is connected to the rotary element (18) for rotating the rotary element (18); and optionally
the stop (44) limits a rotatability of the guide contour follower (42) and thus of the rotary element (18) and/or the guide contour follower (42) and thus the rotary element (18) can be held by the stop (44) in at least one rotary position by means of magnetic interaction with the guide contour follower (42).

## Revendications

1. Dispositif de serrage (10) permettant de maintenir un récipient pour une installation de traitement de récipients, présentant :
une paire de bras de serrage (12, 14) ;
un dispositif de pivotement (16) qui est relié à la paire de bras de serrage (12, 14) et qui supporte la paire de bras de serrage (12, 14) de manière à ce qu'ils puissent pivoter l'un par rapport à l'autre ; et
un élément rotatif (18) qui est agencé entre la paire de bras de serrage (12, 14), dans lequel la paire de bras de serrage (12, 14) peut pivoter l'un par rapport à l'autre en fonction d'une position de rotation de l'élément rotatif (18) par interaction magnétique entre l'élément rotatif (18) et la paire de bras de serrage (12, 14) par le biais du dispositif de pivotement (16),
**caractérisé en ce que** :
l'élément rotatif (18) présente un axe de rotation qui s'étend sensiblement parallèlement à au moins un axe de pivotement (34, 36) du dispositif de pivotement (16) ; et/ou
une rotation de l'élément rotatif (18) est limitée par une butée (44).

2. Dispositif de serrage (10) selon la revendication 1, dans lequel :
la paire de bras de serrage (12, 14) peut pivoter dans une position de fermeture, et de préférence y être maintenue, par interaction magnétique entre l'élément rotatif (18) et la paire de bras de serrage (12, 14) ; et/ou
la paire de bras de serrage (12, 14) peut pivoter dans une position d'ouverture, et de préférence y être maintenue, par interaction magnétique entre l'élément rotatif (18) et la paire de bras de serrage (12, 14).

3. Dispositif de serrage (10) selon la revendication 1 ou la revendication 2, dans lequel :
l'élément rotatif (18) peut tourner dans une première position de rotation dans laquelle la paire de bras de serrage (12, 14) est en interaction magnétique avec l'élément rotatif (18) pour faire pivoter la paire de bras de serrage (12, 14).

4. Dispositif de serrage (10) selon l'une des revendications précédentes, dans lequel :
l'élément rotatif (18) peut tourner dans une seconde position de rotation dans laquelle il n'y a pas d'interaction magnétique ou seulement une interaction magnétique insignifiante entre l'élément rotatif (18) et la paire de bras de serrage (12, 14), et/ou dans laquelle la paire de bras de serrage (12, 14) peut pivoter en arrière par le biais d'un dispositif de précontrainte ; ou
l'élément rotatif (18) peut tourner dans une seconde position de rotation dans laquelle la paire de bras de serrage (12, 14) est en interaction magnétique avec l'élément rotatif (18) pour faire pivoter en arrière la paire de bras de serrage (12, 14).

5. Dispositif de serrage (10) selon la revendication 3 ou la revendication 4, dans lequel :
la première position de rotation et la seconde position de rotation sont tournées l'une par rapport à l'autre dans une plage comprise entre un quart de tour et un demi-tour de l'élément rotatif (18).

6. Dispositif de serrage (10) selon l'une des revendications précédentes, dans lequel :
la paire de bras de serrage (12, 14) présente un premier corps de bras de serrage (20), un second corps de bras de serrage (26), un premier aimant de bras de serrage (22) et un second aimant de bras de serrage (28) ;
le premier aimant de bras de serrage (22) est monté sur le premier corps de bras de serrage (20) et est agencé pour une interaction magnétique avec l'élément rotatif (18) ; et
le second aimant de bras de serrage (28) est monté sur le second corps de bras de serrage (26) et est agencé pour une interaction magnétique avec l'élément rotatif (18).

7. Dispositif de serrage (10) selon l'une des revendications précédentes, dans lequel :
l'élément rotatif (18) présente au moins un aimant (38, 40), de préférence deux aimants (38, 40) agencés sur des côtés opposés de l'élément rotatif (18), qui est agencé pour une interaction magnétique avec la paire de bras de serrage (12, 14).

8. Dispositif de serrage (10) selon la revendication 7, dans lequel :
l'élément rotatif (18) est réalisé sous la forme d'un arbre à cames agissant sans contact avec deux cames orientées en sens inverse, qui sont formées par l'au moins un aimant (38, 40) de l'élément rotatif (18).

9. Dispositif de serrage (10) selon la revendication 7 ou la revendication 8, dans lequel :
l'élément rotatif (18) présente deux autres aimants (48, 50) qui, dans une seconde position de rotation de l'élément rotatif (18), sont en interaction magnétique avec la paire de bras de serrage (12, 14) pour faire pivoter en arrière la paire de bras de serrage (12, 14).

10. Dispositif de serrage (10) selon la revendication 9, dans lequel :
les deux aimants (38, 40) et les deux autres aimants (48, 50) de l'élément rotatif (18) sont agencés en alternance et/ou décalés l'un par rapport à l'autre par rapport à un axe de rotation de l'élément rotatif (18), de préférence décalés dans une plage allant jusqu'à 90° ; et/ou
les deux aimants (38, 40) d'une part et les deux autres aimants (48, 50) d'autre part sont orientés avec une polarité magnétique inversée dans une direction radiale vers l'extérieur par rapport à un axe de rotation de l'élément rotatif (18).

11. Dispositif de serrage (10) selon l'une des revendications précédentes, présentant en outre :
une plaque de base (32) sur laquelle la paire de bras de serrage (12, 14) est montée de manière à pouvoir pivoter l'un par rapport à l'autre par le biais du dispositif de pivotement (16), de préférence par le biais de deux axes de pivotement (34, 36) du dispositif de pivotement (16).

12. Dispositif de serrage (10) selon l'une des revendications précédentes, présentant en outre :
un dispositif de précontrainte (46) qui précontraint la paire de bras de serrage (12, 14) à l'encontre d'un pivotement par le biais de l'interaction magnétique entre l'élément rotatif (18) et la paire de bras de serrage (12, 14).

13. Dispositif de serrage (10) selon l'une des revendications précédentes, présentant en outre :
un suiveur de contour de guidage (42) qui est relié à l'élément rotatif (18) pour faire tourner l'élément rotatif (18) ; et éventuellement
la butée (44) limite une possibilité de rotation du suiveur de contour de guidage (42) et donc de l'élément rotatif (18) et/ou la butée (44) permet de maintenir le suiveur de contour de guidage (42) et donc l'élément rotatif (18) dans au moins une position de rotation par le biais d'une interaction magnétique avec le suiveur de contour de guidage (42).
